Europäisches Patentamt

European Patent Office

Office européen des brevets

(19)

(11) **EP 0 855 597 B1**

(12) **EUROPEAN PATENT SPECIFICATION**

(45) Date of publication and mention
of the grant of the patent:
**30.03.2005 Bulletin 2005/13**

(51) Int Cl.⁷: **G01P 21/02**, G01P 3/56,
G01P 3/00, B60C 23/06

(21) Application number: **98101381.6**

(22) Date of filing: **27.01.1998**

(54) **Device for determining initial correction factors for correcting rotational angular velocity measurements of vehicle tires**

Vorrichtung zur Bestimmung von anfänglichen Korrekturfaktoren zur Korrektur der Drehzahlmesswerte der Reifen eines Fahrzeugs

Dispositif pour déterminer des facteurs initiaux de correction pour corriger des mesures de la vitesse angulaire des roues d'un véhicule

(84) Designated Contracting States:
**DE FR GB**

(30) Priority: **27.01.1997 JP 1274897**

(43) Date of publication of application:
**29.07.1998 Bulletin 1998/31**

(73) Proprietors:
• **SUMITOMO ELECTRIC INDUSTRIES, LTD.**
**Osaka-shi, Osaka 541 (JP)**
• **Sumitomo Rubber Industries Ltd.**
**Kobe-shi, Hyogo 651 (JP)**

(72) Inventor: **Nakajima, Mikao**
**1-1 Koyakita, Itami-shi, Hyogo 664 (JP)**

(74) Representative: **Sajda, Wolf E., Dipl.-Phys. et al**
**MEISSNER, BOLTE & PARTNER**
**Postfach 86 06 24**
**81633 München (DE)**

(56) References cited:
**EP-A- 0 510 466          EP-A- 0 826 968**
**US-A- 5 179 526          US-A- 5 415 468**

• **MAYER H: "COMPARATIVE DIAGNOSIS OF TYRE PRESSURES" PROCEEDINGS OF THE CONFERENCE ON CONTROL APPLICATIONS, GLASGOW, AUG. 24 - 26, 1994, vol. VOL. 1, no. CONF. 3, 24 August 1994, INSTITUTE OF ELECTRICAL AND ELECTRONICS ENGINEERS, pages 627-632, XP000682538**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 855 597 B1

**Description**

BACKGROUND OF THE INVENTION

Field of the Invention

The present invention relates to an initial correction factor operating device used for a tire pressure drop detecting device, for example, for finding an initial correction factor for eliminating the effect on the rotational angular velocities of the tires by a difference in effective rolling radius depending on an initial difference between tires.

Description of Related Art

In recent years, as a safety device of a four-wheel vehicle such as an automobile or a truck, devices for detecting the drop in air pressure of a tire (DWS) have been developed, and some of them have been put to practical use.

An example of a method of detecting the drop in air pressure of a tire is a method utilizing a difference among the respective rotational angular velocities $F_1$, $F_2$, $F_3$, and $F_4$ of four tires $W_1$, $W_2$, $W_3$, and $W_4$ mounted on a vehicle. This method utilizes the fact that the rotational angular velocity $F_i$ (i = 1, 2, 3, 4) changes depending on the condition of the air pressure of the tire $W_i$. That is, when the air pressure of any one of the tires $W_i$ drops, the effective rolling radius of the tire $W_i$ decreases. As a result, the rotational angular velocity $F_i$ of the tire $W_i$ increases. Therefore, the drop in the air pressure of the tire $W_i$ can be judged on the basis of the difference in the rotational angular velocity $F_i$.

The effective rolling radius is a value obtained by dividing the travel distance of the tire $W_i$ in one free rotation in a loaded state by $2\pi$.

A judged value used in detecting the drop in the air pressure of the tire $W_i$ on the basis of the difference in the rotational angular velocity $F_i$ is found by the following equation (1), for example (see Japanese Patent Laid-Open (KOKAI) No. 305011/1988, Japanese Patent Laid-Open (KOKAI) No. 212609/1992, etc.).

$$D = \frac{\dfrac{F_1 + F_4}{2} - \dfrac{F_2 + F_3}{2}}{\dfrac{F_1 + F_2 + F_3 + F_4}{4}} \times 100 \tag{1}$$

If all the effective rolling radii of the tires $W_i$ are the same, the respective rotational angular velocities $F_i$ are the same ($F_1 = F_2 = F_3 = F_4$). In this case, the judged value $\underline{D}$ is zero. Therefore, thresholds $D_{TH1}$ and $D_{TH2}$ (where $D_{TH1}$, $D_{TH2} > 0$) are set. When the condition indicated by the following expression (2) is satisfied, it is judged that there is a tire $W_i$ whose air pressure drops. When the condition is not satisfied, it is judged that all the tires $W_i$ have normal internal pressure.

$$D < - D_{TH1} \text{ or } D > D_{TH2} \tag{2}$$

The effective rolling radius of actual tires varies within a fabrication tolerance (such variation is referred to as an "an initial difference" hereinafter). That is, even if all the four tires $W_i$ have normal internal pressure, the effective rolling radii of the four tires $W_i$ differ due to the initial difference. Correspondingly, the rotational angular velocities $F_i$ of the tires $W_i$ vary. As a result, the judged value $\underline{D}$ may be a value other than zero. Therefore, it may be erroneously detected that the air pressure drops, although it does not drop. In order to detect the drop in the air pressure with high precision, therefore, it is necessary to eliminate the effect of the initial difference from the detected rotational angular velocity $F_i$.

SUMMARY OF THE INVENTION

It may be considered that as a technique for eliminating the effect of an initial difference from rotational angular velocities $F_i$, a technique proposed in Japanese Patent Application Serial No. 8-58039 (not published as of the filing data of the present application) is applied. In the technique, initial correction factors $K_1$, $K_2$, and $K_3$ are calculated as expressed by the following equations (3) to (5):

$$K_1 = F_1 / F_2 \tag{3}$$

$$K_2 = F_3 / F_4 \tag{4}$$

$$K3 = \frac{F_1 + K_1 \times F_2}{F_3 + K_2 \times F_4} \tag{5}.$$

The initial correction factor $K_1$ is a factor for correcting a difference in effective rolling radius depending on an initial difference between right and left front tires $W_1$ and $W_2$. The initial correction factor $K_2$ is a factor for correcting a difference in effective rolling radius depending on an initial difference between right and left rear tires $W_3$ and $W_4$. The initial correction factor $K_3$ is a factor for correcting a difference in effective rolling radius depending on an initial difference between the front tire $W_1$ and the rear tire $W_3$.

The rotational angular velocities $F_i$ are corrected as expressed by the following equations (6) to (9) using the calculated initial correction factors $K_1$ to $K_3$, so that new rotational angular velocities $F1_i$ are found. Consequently, the effect of the initial difference on the rotational angular velocities $F_i$ is eliminated:

$$F1_1 = F_1 \tag{6}$$

$$F1_2 = K_1 \times F_2 \tag{7}$$

$$F1_3 = K_3 \times F_3 \tag{8}$$

$$F1_4 = K_2 \times K_3 \times F_4 \tag{9}.$$

When the initial correction factors $K_1$ to $K_3$ are calculated, the vehicle must be linearly coasting. That is, if the vehicle is linearly coasting, the effect of the slip factor of the tire hardly affects the rotational angular velocity $F_i$. As a result, the initial correction factors $K_1$ to $K_3$ faithfully representing a difference in effective rolling radius depending on the initial difference can be obtained. Particularly, the initial correction factor $K_3$ is found on the basis of the ratio of the rotational angular velocities of the front tire and the rear tire, whereby the effect of the slip factor of the driving tire must be reliably eliminated upon setting driving torque or braking torque to approximately zero. In order to obtain the initial correction factor faithfully representing a difference in effective rolling radius depending on the initial difference, it is essential that the vehicle is caused to linearly coast.

On the other hand, the tire pressure drop detecting device according to the above-mentioned proposed technique does not comprise means for automatically detecting that a vehicle is linearly coasting. In the tire pressure drop detecting device according to the proposed technique, therefore, the calculation of the initial correction factors $K_1$ to $K_3$ is started in response to an operation of an initializing switch by a user. That is, when the initial correction factors $K_1$ to $K_3$ are calculated, the user operates the initializing switch upon intentionally causing the vehicle to linearly coast. Consequently, the device is informed that the vehicle is linearly coasting.

A public road is generally considered to be a road on which the vehicle is caused to linearly coast. In view of present road environments such as chronic traffic jam and a small number of straight roads, it is difficult and it is not preferable from the point of view of traffic safety to intentionally cause the vehicle to linearly coast on the public road. Therefore, a technique that can easily find a correct initial correction factor has been desired.

EP-A-510466 relates to the determination of correction factors for the individual wheels of a vehicle. These factors are derived in two successive steps:

First, correction factors are obtained for eliminating differences between the front and rear tires. This is done only when the vehicle is coasting. Then, correction factors are determined for eliminating the differences between right and left tires. This is done only when the vehicle is linearly traveling. In other words, the front and rear tires are corrected under non-slipping traveling conditions whereas left and right tires are corrected under non-slipping and non-cornering traveling conditions. It is, however, difficult in normal traffic to maintain these conditions to find a correct initial correction factor.

EP-A-826968 (which is a prior European application, published after the priority date of the present application) also deals with the definition and purpose, as wet as a way of determining the correction factors in a similar system. This document teaches to apply correction factors $K_1$, $K_2$ and $K_3$ for correcting an output of rotational angular velocity detecting means. These factors $K_1$ to $K_3$ are corrected when the vehicle is linearly traveling and coasting and an initialization switch is operated by the driver. Hence, the correction is performed as the result of a judgement of linear traveling or coasting condition by the driver. No correction factor is operated when the driver forgets to give the start signal.

An object of the present invention is to provide an initial correction factor operating device capable of simply finding a correct initial correction factor in normal traffic.

Another object of the present invention is to provide a device capable of finding a correct initial correction factor even if a user does not give special attention to the calculation of the initial correction factor.

These objections are solved by a device according to claim 1. Further developments of the device according to the invention are specified in the subclaims.

A device according to the present invention comprises means for judging whether or not a vehicle is linearly traveling, and means for calculating an initial correction factor $K_1$ for eliminating the effect of a difference in effective rolling radius depending on an initial difference between right and left front tires on rotational angular velocities of the tires and an initial correction factor $K_2$ for eliminating the effect of a difference in effective rolling radius depending on an initial difference between right and left rear tires on the rotational angular velocities of the tires on the basis of an output of the rotational angular velocity detecting means, on condition that it is judged that the vehicle is linearly traveling.

When the vehicle is traveling on a public road, the vehicle will be temporarily linearly traveling, although it is not coasting, or linearly coasting.

The device according to the present invention is so adapted in view of the foregoing point as to judge whether or not the vehicle is linearly traveling, and calculate, when the vehicle is linearly traveling, the initial correction factors $K_1$ and $K_2$ even if the vehicle is not coasting. Consequently, it is possible to simply calculate correct initial correction factors even if a user does not intentionally cause the vehicle to linearly travel.

The device according to the present invention further comprises means for judging whether or not the vehicle is cornering, means for finding the slip factor Rs of the tire, and means for calculating an initial correction factor $K_3$ for eliminating the effect of the difference in effective rolling radius depending on the initial difference between the front tire and the rear tire on the rotational angular velocities of the tires by substituting the output of the rotational angular velocity detecting means, the calculated initial correction factors $K_1$ and $K_2$, and the calculated slip factor Rs into a predetermined operation expression when it is judged that the vehicle is cornering.

The device may further comprise means for calculating a judged value $\underline{D}$ for judging the drop in air pressure of the tire on the basis of the output of the rotational angular velocity detecting means. In this case, it is preferable that the means for finding the slip factor Rs substitutes the lateral acceleration LA of the vehicle and the judged value $\underline{D}$ into a predetermined operation expression, to find the slip factor Rs of the tire.

The device according to one embodiment of the present invention further comprises means for calculating the lateral acceleration LA of the vehicle on the basis of the output of the rotational angular velocity detecting means.

The initial correction factors $K_1$ to $K_3$ are used for the purpose of eliminating the effect of the initial difference from the rotational angular velocities $F_1$, $F_2$, $F_3$ and $F_4$ of the respective tires in finding the judged value $\underline{D}$ for judging the drop in air pressure of the tire, for example. On the other hand, the rotational angular velocities $F_1$ to $F_4$ also vary depending on the movement of the load on the vehicle at the time of cornering. In finding the judged value $\underline{D}$, therefore, the variations in the rotational angular velocities $F_1$ to $F_4$ due to the movement of the load on the vehicle is preferrably corrected. An equation used for the correction is the following equation (10), for example. In the following equation (10), A1 and A2 are constants:

$$D' = D - (A1 \times LA + A2 \times LA \times Rs) \tag{10}$$

The slip factor Rs corresponds to the ratio of the rotational angular velocity of the driving tire to the rotational angular velocity of the following tire, so that it can be expressed by the following equation (11) in the case of an FF (front engine front drive) vehicle, for example:

$$Rs = \frac{F_1 + K_1 \times F_2}{K_3 \times F_3 + K_2 \times K_3 \times F_4} - 1 \tag{11}$$

On the other hand, the initial correction factors $K_1$ to $K_3$ are generally calculated when all the four tires have normal internal pressure, for example, after the tires are replaced. If the initial correction factors $K_1$ to $K_3$ are accurately determined, therefore, a judged value $\underline{D'}$ should be zero during cornering. If zero is substituted into $\underline{D'}$ in the foregoing equation (10), solving the equation for the slip factor Rs, therefore, gives the following equation (12). The equation (12) corresponds to a first operation expression.

$$Rs = \frac{D - A1 \times LA}{A2 \times LA} \tag{12}$$

The slip factor Rs can be thus calculated on the basis of the lateral acceleration LA of the vehicle and the judged value $\underline{D}$.

When the slip factor Rs expressed by the equation (12) is substituted into the foregoing equation (11), to arrange the equation with respect to $K_3$, the following equation (13) is obtained. The equation (13) corresponds to a second operation expression.

$$K_3 = \frac{1}{Rs + 1} \times \frac{F_1 + K_1 \times F_2}{F_3 + K_2 \times F_4} \tag{13}$$

The initial correction factor $K_3$ can be thus calculated on the basis of the initial correction factors $K_1$ and $K_2$, the slip factor Rs, and the rotational angular velocities $F_1$ to $F_4$.

The equation (13) for calculating the initial correction factor $K_3$ is derived from an equation for eliminating the movement of the load on the vehicle at the time of cornering from the rotational angular velocity $F_i$. When the vehicle is cornering, therefore, a precise initial correction factor $K_3$ can be calculated. Even if the vehicle is not linearly coasting at the time of usual traveling, for example, the precise initial correction factor $K_3$ can be calculated if the vehicle is only cornering.

When the vehicle is cornering, an error may be included in the initial correction factor $K_3$ depending on the value of the slip factor Rs. If the device further comprises means for judging whether or not the slip factor Rs takes a value within a predetermined range, and means for inhibiting the calculation of the initial correction factor $K_3$ when it is judged that the slip factor Rs is in the range, it is possible to prevent the initial correction factor $K_3$ from being erroneously calculated.

The device according to one embodiment of the present invention further comprises means for judging whether or not the vehicle is coasting, means for calculating an initial correction factor Kx for eliminating the effect of the difference in effective rolling radius depending on the initial difference between the front tire and the rear tire on the rotational angular velocities of the tires on the basis of the calculated initial correction factors $K_1$ and $K_2$ and the output of the rotational angular velocity detecting means on condition that it is judged that the vehicle is linearly traveling and it is also judged that the vehicle is coasting, means for judging which of the calculated initial correction factors Kx and Ky is higher in precision, and means for taking the initial correction factor which is judged to be higher in precision as the final initial correction factor $K_3$ for eliminating the effect of the difference in effective rolling radius depending on the initial difference between the front tire and the rear tire on the rotational angular velocities of the tires.

The device may further comprise means for calculating a judged value $\underline{D}$ for judging the drop in air pressure of the tire on the basis of the output of the rotational angular velocity detecting means. In the case, it is preferable that the means for finding the slip factor Rs is one for substituting the lateral acceleration LA of the vehicle and the calculated judged value $\underline{D}$ into a predetermined operation expression, to find the slip factor Rs of the tire.

The device according to one embodiment of the present invention further comprise means for judging whether or not the vehicle is coasting, means for calculating an initial correction factor Kx for eliminating the effect of the difference in effective rolling radius depending on the initial difference between the front tire and the rear tire on the rotational angular velocities of the tires on the basis of the calculated initial correction factors $K_1$ and $K_2$ and the output of the rotational angular velocity detecting means on condition that it is judged that the vehicle is linearly traveling and it is also judged that the vehicle is coasting, means for calculating the lateral acceleration LA of the vehicle on the basis of the output of the rotational angular velocity detecting means, means for calculating a judged value $\underline{D}$ for judging the drop in air pressure of the tire on the basis of the output of the rotational angular velocity detecting means, means for substituting the lateral acceleration LA of the vehicle and the judged value $\underline{D}$ thus calculated into a predetermined first operation expression, to calculate the slip factor Rs of the tire, means for judging whether or not the vehicle is cornering on the basis of the calculated lateral acceleration LA of the vehicle, means for calculating an initial correction factor Ky for eliminating the effect of the difference in effective rolling radius depending on the initial difference between the front tire and the rear tire on the rotational angular velocities of the tires by substituting the output of the rotational angular velocity detecting means, the calculated initial correction factors $K_1$ and $K_2$, and the calculated slip factor Rs into a predetermined second operation expression on condition that it is judged that the vehicle is cornering, means for judging which of the calculated initial correction factors Kx and Ky is higher in precision, and means for taking the initial correction factor which is higher in precision as the final initial correction factor $K_3$ for eliminating the effect of the difference in effective rolling radius depending on the initial difference between the front tire and the rear tire on the rotational angular velocities of the tires.

According to the above-mentioned construction, the initial correction factor Kx calculated in a case where the vehicle is linearly coasting and the initial correction factor Ky calculated in a case where the vehicle is cornering are compared to judge which of the initial correction factors is higher in precision. The initial correction factor which is higher in precision is taken as the final initial correction factor $K_3$. Consequently, a more precise initial correction factor $K_3$ can be obtained, as compared with that in a case where an initial correction factor $K_3$ is calculated by limiting either one of the cases.

Also in this case, it is preferable that the calculation of the initial correction factor $K_3$ is inhibited when the slip factor Rs is in a predetermined range.

In the device according to one embodiment of the present invention, the means for calculating the initial correction factor Kx includes means for subjecting a plurality of data to an average operation, and the means for calculating the initial correction factor Ky includes means for subjecting a plurality of data to an average operation. The means for judging which of the initial correction factors Kx and Ky is higher in precision includes means for judging the precision on the basis of the numbers of data which have been subjected to the respective average operations.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a schematic block diagram showing the construction of a tire pressure drop detecting device to which one embodiment of the present invention is applied;
Fig. 2 is a block diagram showing the electrical construction of a tire pressure drop detecting device;
Fig. 3 is a flow chart for explaining the whole of tire pressure drop detection processing;
Fig. 4 is a flow chart for explaining the whole of tire pressure drop detection processing;
Figs. 5 and 6 are flow charts for explaining first initialization processing;
Fig. 7 is a diagram for explaining the relationship between the speed of a vehicle and lateral acceleration; and
Fig. 8 is a flow chart for explaining second initialization processing.

## DESCRIPTION OF THE PREFERRED EMBODIMENTS

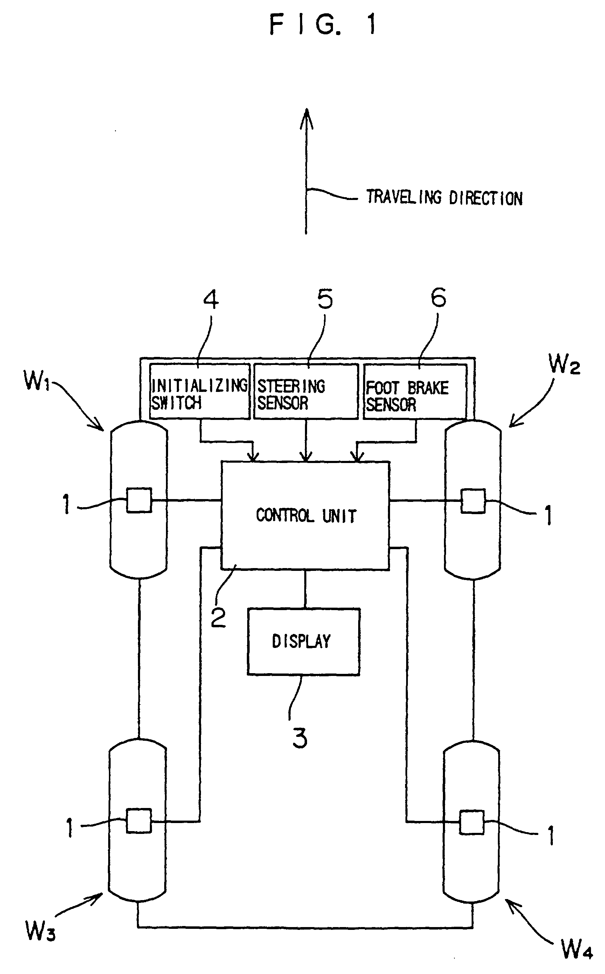

Fig. 1 is a block diagram showing the construction of a tire pressure drop detecting device to which one embodiment of the present invention is applied. The tire pressure drop detecting device determines whether or not the air pressure of any of four tires $W_1$, $W_2$, $W_3$, and $W_4$ provided in a four-wheel vehicle drops. The tires $W_1$ and $W_2$ respectively correspond to right and left front tires. The tires $W_3$ and $W_4$ respectively correspond to right and left rear tires.

A wheel speed sensor 1 is provided in relation to each of the tires $W_1$, $W_2$, $W_3$, and $W_4$. Output of the wheel speed sensors 1 are fed to a control unit 2.

A display 3 is connected to the control unit 2. The display 3 is for reporting the tire $W_i$ (i = 1, 2, 3, 4) whose air pressure drops, and may be constituted by a liquid crystal display device, a plasma display device, a CRT (Cathode-Ray Tube), or the like.

An initializing switch 4 is also connected to the control unit 2. The initializing switch 4 is operated by a user in calculating initial correction factors $K_j$ (j = 1, 2, 3) for eliminating the effect of an initial difference between the tires $W_i$. The initial difference means a variation in effective rolling radius within a fabrication tolerance between the tires Wi.

A steering sensor 5 for detecting the steering angle of a steering wheel (not shown) and a foot brake sensor 6 for determining whether or not a foot brake (not shown) is stepped on are further connected to the control unit 2.

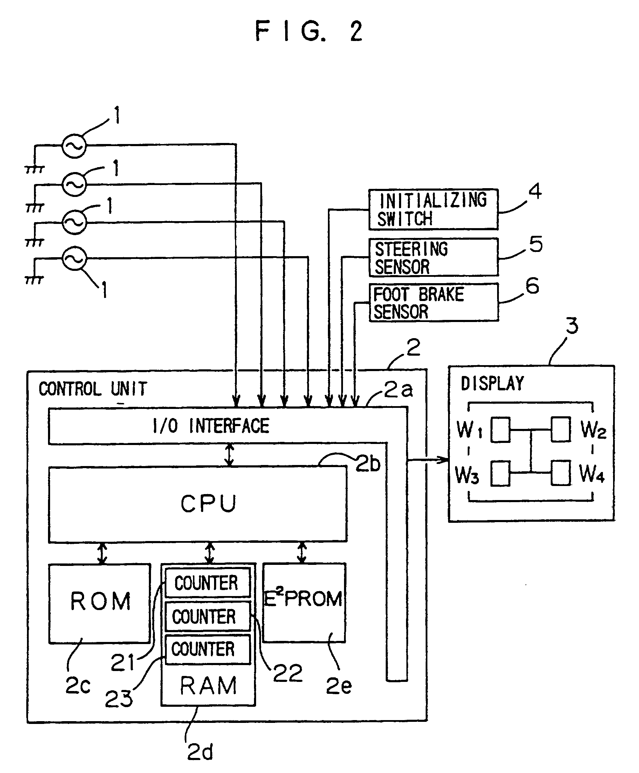

Fig. 2 is a block diagram showing the electrical construction of the tire pressure drop detecting device. The control unit 2 is constituted by a microcomputer including an I/O interface 2a, a CPU 2b, a ROM 2c, a RAM 2d, and an EEPROM 2e.

The I/O interface 2a is required to deliver signals to external devices such as the wheel speed sensors 1, the initializing switch 4, the steering sensor 5 and the foot brake sensor 6. The CPU 2b is for performing various operation processing in accordance with a control operation program stored in the ROM 2c. The RAM 2d is one to which data or the like is temporarily written when the CPU 2b performs a control operation and from which the written data or the like is read out. A part of a storage area of the RAM 2d is utilized as counters 21, 22, and 23 used in initialization processing as described later. The EEPROM 2e stores data representing a relational expression for specifying the coasting range which is the range of the front/rear acceleration FRA of the vehicle at which the vehicle is judged to be coasting.

The wheel speed sensor 1 outputs a pulse signal corresponding to the speed of rotation of the tire $W_i$ (hereinafter referred to as "wheel speed pulses"). In the CPU 2b, the rotational angular velocity $F_i$ of each of the tires $W_i$ is calculated for each predetermined sampling period $\Delta T$ (for example, $\Delta T = 1$ (sec)) on the basis of the wheel speed pulses outputted from the wheel speed sensor 1.

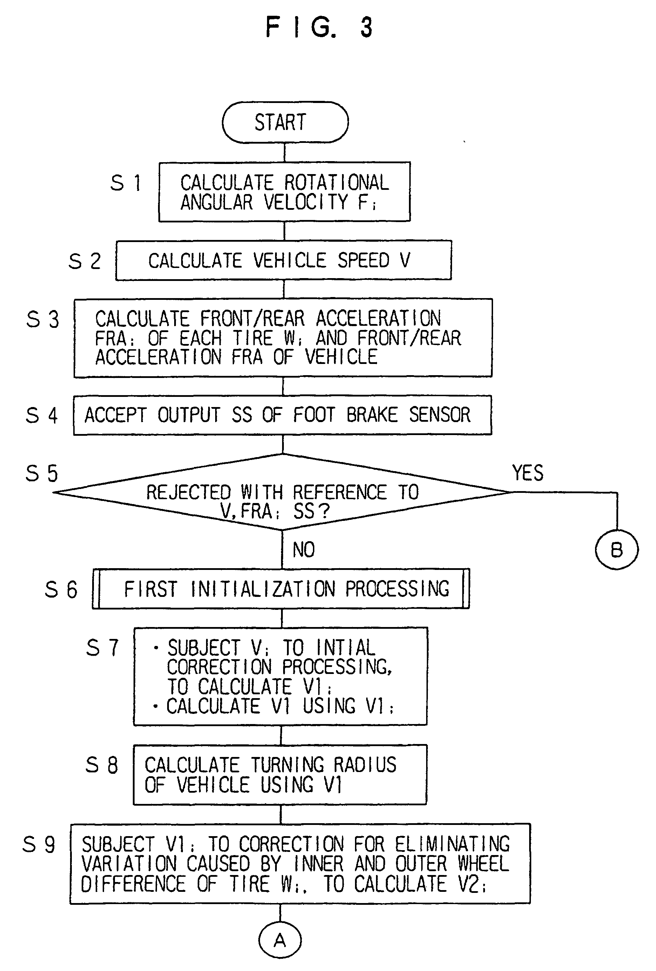

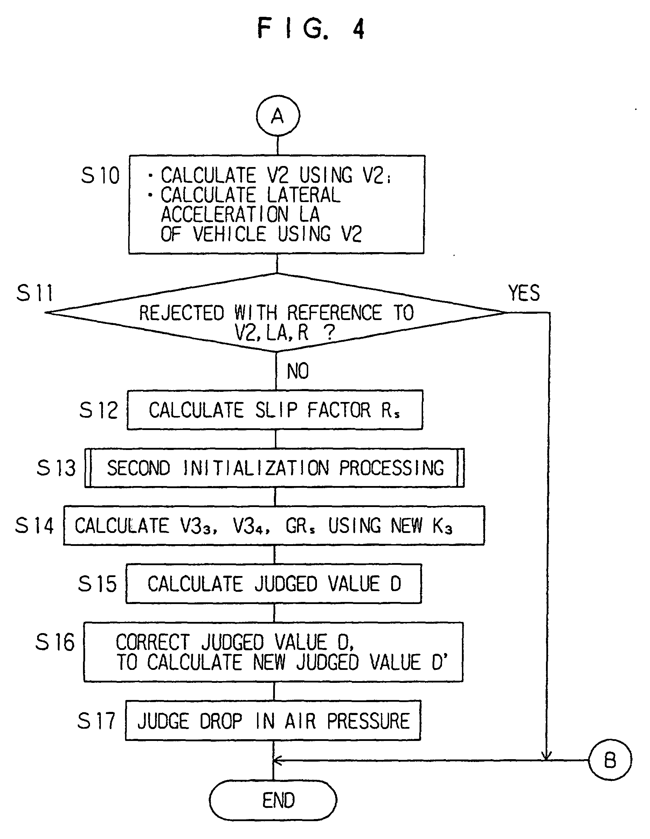

Figs. 3 and 4 are flow charts for explaining processing for detecting the air pressure of a tire in the tire pressure drop detecting device. The CPU 2b operates in accordance with the predetermined program stored in the ROM 2c, so that the processing is repeatedly performed each sampling period $\Delta T$ by the control unit 2. In the following description, it is presupposed that an objective vehicle is an FF (front engine front drive) vehicle.

The CPU 2b calculates the rotational angular velocity $F_i$ of each of the tires $W_i$ on the basis of wheel speed pulses outputted from the wheel speed sensor 1 (step S1 in Fig. 3). Judgment processing whether or not the rotational angular velocity $F_i$ is rejected is then performed depending on whether or not the calculated rotational angular velocity $F_i$ is likely to include an error.

More specifically, the rotational angular velocity $F_i$ may include an error depending on the speed of the vehicle (hereinafter referred to as "vehicle speed"), the front/rear acceleration of each of the tires $W_i$, the turning radius of the vehicle and the lateral acceleration of the vehicle, or may include an error when the foot brake is stepped on.

More specifically, when the vehicle speed is significantly low, the detection precision of the wheel speed sensor 1 is significantly decreased, whereby it is highly possible that the calculated rotational angular velocity $F_i$ includes an error. Further, when the front/rear acceleration of each of the tires $W_i$ is relatively large, or the foot brake is stepped on, the effect of the slip of the tire $W_i$ due to rapid acceleration or rapid deceleration of the vehicle, for example, is considered, whereby it is highly possible that the calculated rotational angular velocity $F_i$ includes an error. Furthermore, when the turning radius of the vehicle is relatively small, or the lateral acceleration of the vehicle is relatively large, the tire $W_i$ may laterally slip, whereby it is highly possible that the calculated rotational angular velocity $F_i$ includes an error.

When it is thus highly possible that the rotational angular velocity $F_i$ includes an error, it is preferable that the rotational angular velocity $F_i$ is rejected without being employed for detecting the drop in air pressure.

On the other hand, the lateral acceleration of the vehicle is proportional to the square of the vehicle speed. In a case where the vehicle speed is calculated on the basis of the rotational angular velocity $F_i$, therefore, when the rotational angular velocity $F_i$ varies, the effect of the variation on the lateral acceleration of the vehicle rapidly increases as the vehicle speed increases. Therefore, a large error may be included in the lateral acceleration of the vehicle.

One of causes of the variation in the rotational angular velocity $F_i$ is the variation in the effective rolling radius of each of the tires $W_i$ depending on the initial difference. Further, the difference between the distances of the tire on the inside of a corner and the tire on the outside of the corner (an inner and outer wheel difference) in a case where the vehicle is cornering is also a cause of the variation in the rotational angular velocity $F_i$.

Therefore, it is preferable that judgment of rejection based on the lateral acceleration of the vehicle is made after the effects of the initial difference and the inner and outer wheel difference are eliminated from the rotational angular velocity $F_i$.

Furthermore, when the effect of the inner and outer wheel difference is eliminated from the rotational angular velocity $F_i$, the turning radius of the vehicle is used, as described later, as a parameter for the elimination. When the turning radius of the vehicle which is being cornering is calculated on the basis of the rotational angular velocity $F_i$, an error may occur due to the movement of the load toward the outside of the corner in the turning radius of the vehicle. When the turning radius of the vehicle is found, therefore, the effect of the movement of the load on the vehicle must be eliminated. However, the amount of the movement of the load on the vehicle is proportional to the vehicle speed. When the vehicle speed is calculated on the basis of the rotational angular velocity $F_i$, therefore, the effect of the variation in the rotational angular velocity $F_i$ depending on the initial difference on the turning radius of the vehicle increases as the vehicle speed increases. Therefore, it is preferable that judgment of rejection based on the turning radius of the vehicle is made after the effect of the initial difference is eliminated from the rotational angular velocity $F_i$.

In the present embodiment, therefore, judgment of rejection is made two times. Specifically, judgment of rejection based on the vehicle speed $V_1$, the front/rear acceleration $FRA_i$ of each of the tires $W_i$ and the foot brake is first made. Judgment of rejection based on the speed V2 of the vehicle, the lateral acceleration LA of the vehicle and the turning radius R of the vehicle is then made after the effects of the initial difference and the inner and outer wheel difference are eliminated.

The CPU 2b calculates the vehicle speed $\underline{V}$ and the front/rear acceleration $FRA_i$ of each of the tires $W_i$ after calculating the rotational angular velocity $F_i$, and further accepts an output SS of the foot brake sensor 6 (steps S2, S3, and S4). Further, when the front/rear acceleration $FRA_i$ of each of the tires $W_i$ is calculated, the front/rear acceleration FRA of the vehicle used in first initialization processing in the step S6 is also calculated.

The vehicle speed $\underline{V}$ is calculated on the basis of the speed $V_i$ of each of the tires $W_i$. The speed $V_i$ of each of the tires $W_i$ is calculated in accordance with the following equation (20), where r is a constant corresponding to the effective rolling radius at the time of linear traveling, and is stored in the ROM 2c:

$$V_i = r \times F_i \tag{20}$$

The vehicle speed $\underline{V}$ is calculated by the following equation (21) on the basis of the calculated speed $V_i$ of each of the tires $W_i$:

$$V = (V_1 + V_2 + V_3 + V_4) / 4 \tag{21}$$

The front/rear acceleration $FRA_i$ of each of the tires $W_i$ is calculated by the following equation (22), letting $BV_i$ be the speed of the tire $W_i$ calculated in the preceding sampling period:

$$FRA_i = (V_i - BV_i) / (\Delta T \times 9.8) \tag{22}$$

9.8 is inserted in the denominator in the foregoing equation (22) in order to convert the front/rear acceleration $FRA_i$ of each of the tires $W_i$ in $\underline{G}$ (gravity acceleration).

The front/rear acceleration FRA of the vehicle is calculated by the following equation (23) on the basis of the front/rear acceleration $FRA_i$ of each of the tires $W_i$:

$$FRA = (FRA_1 + FRA_2 + FRA_3 + FRA_4) / 4 \tag{23}$$

The vehicle speed $\underline{V}$ and the front/rear acceleration FRA of the vehicle may be directly detected using sensors.

It is then judged whether or not the rotational angular velocity $F_i$ calculated in the current sampling period is rejected on the basis of the vehicle speed $\underline{V}$ and the front/rear acceleration $FRA_i$ of each of the tires $W_i$ which are thus calculated, and the output SS of the foot brake sensor 5 (step S5). Specifically, when any one of the following conditions ① to ③ is satisfied, the rotational angular velocity $F_i$ is rejected:

①  $V < V_{TH}$ (for example, $V_{TH} = 10$ (km/h))
②  MAX $\{|FRA_i|\} > A_{TH}$
   (for example, $A_{TH} = 0.1$ g : g = 9.8 (m/sec$^2$))
③  The foot brake is stepped on.

When the rotational angular velocity $F_i$ is not rejected, the CPU 2b performs first initialization processing (step S6). The first initialization processing is processing for calculating initial correction factors $K_j$ (j = 1, 2, 3) on condition that the vehicle is linearly coasting.

An initial correction factor $K_1$ is a factor for correcting the difference in effective rolling radius depending on the initial difference between the right and left front tires $W_1$ and $W_2$. An initial correction factor $K_2$ is a factor for correcting the difference in effective rolling radius depending on the initial difference between the right and left rear tires $W_3$ and $W_4$. An initial correction factor $K_3$ is a factor for correcting the difference in effective rolling radius depending on the initial difference between the front tire $W_1$ and the rear tire $W_3$. The initial correction factor $K_3$ calculated in the first initialization processing is stored as an initial correction factor $BK_3$ in the RAM 2d.

Thereafter, the CPU 2b corrects the speed $V_i$ of each of the tires $W_i$ using the initial correction factors $K_j$ calculated in the first initialization processing (step S7). More specifically, the speed $V_i$ of each of the tires $W_i$ is corrected as expressed by the following equations (24) to (27), to acquire new speeds $V1_i$:

$$V1_1 = V_1 \tag{24}$$

$$V1_2 = K_1 \times V_2 \tag{25}$$

$$V1_3 = BK_3 \times V_3 \tag{26}$$

$$V1_4 = K_2 \times BK_3 \times V_4 \tag{27}.$$

The vehicle speed V1 is calculated as expressed by the following equation (28) on the basis of the speed $V1_i$ of each of the tires $W_i$ after the correction. Consequently, the speed V1 of the vehicle from which the effect of the initial difference has been eliminated is obtained.

$$V1 = (V1_1 + V1_2 + V1_3 + V1_4) / 4 \tag{28}.$$

The turning radius $\underline{R}$ of the vehicle is then calculated on the basis of the vehicle speed V1 (step S8). More specifically, the turning radius $\underline{R'}$ of the vehicle is first calculated as expressed by the following equation (29). In the following equation (29), Tw is the tread width (the distance between the right wheel and the left wheel):

$$R' = \frac{Tw}{2} \times \frac{V1_4 + V1_3}{V1_4 - V1_3} \tag{29}.$$

The turning radius $\underline{R'}$ of the vehicle is then subjected to such correction as to eliminate the effect of the movement of the load on the vehicle. Specifically, it is subjected to correction as expressed by the following equation (30):

$$R = R' \times \{u_1 + u_2 (V1_3 + V1_4)^2\} \tag{30}.$$

In the equation (30), the following values are suitable as $u_1$ and $u_2$. In the following equation (33), $\underline{Q}$ is the load on the vehicle, $\underline{H}$ is the height from the ground plane of the tire to the center of gravity of the vehicle, and $\underline{\alpha}$ is the rate of variation in the effective rolling radius of the tire with respect to the load:

$$u_1 = 1 \tag{31}$$

$$u_2 = \frac{1}{9.8} \times \frac{\beta}{2Tw} \tag{32}$$

where

$$\beta = \frac{Q \times H \times \alpha}{Tw \times 100} \tag{33}.$$

The CPU 2b then further subjects the speed $V1_i$ of each of the tires $W_i$ from which the effect of the initial difference has been eliminated to correction for eliminating the effect of the inner and outer wheel difference on the basis of the calculated turning radius $\underline{R}$ of the vehicle (step S9). Specifically, the speed $V2_i$ of each of the tires $W_i$ after the correction is calculated as expressed by the following equations (34) to (37), where WB is a wheel base:

$$V2_1 = \frac{|R|}{\sqrt{\{(R - Tw/2)^2 + WB^2\}}} \times V1_1 \tag{34}$$

$$V2_2 = \frac{|R|}{\sqrt{\{(R + Tw/2)^2 + WB^2\}}} \times V1_2 \tag{35}$$

$$V2_3 = \frac{|R|}{|R - Tw/2|} \times V1_3 \tag{36}$$

$$V2_4 = \frac{|R|}{|R + Tw/2|} \times V1_4 \tag{37}.$$

The vehicle speed V2 is then calculated as expressed by the following equation (38) on the basis of the calculated speed $V2_i$ of each of the tires $W_i$ after the correction (step S10 in Fig. 4). Consequently, the speed V2 from which the effects of the initial difference and the inner and outer wheel difference have been eliminated is obtained:

$$V2 = (V2_1 + V2_2 + V2_3 + V2_4) / 4 \tag{38}.$$

The CPU 2b then calculates the lateral acceleration LA of the vehicle as expressed by the following equation (39) on the basis of the found vehicle speed V2 and the found turning radius R of the vehicle (step S10):

$$LA = V2^2 / (R \times 9.8) \tag{39}.$$

9.8 is inserted in the denominator in order to convert the lateral acceleration LA of the vehicle in $\underline{G}$ (gravity acceleration).

Furthermore, it is judged whether or not the rotational angular velocity $F_i$ calculated in the current sampling period is rejected on the basis of the vehicle speed V2, the lateral acceleration LA of the vehicle, and the turning radius $\underline{R}$ of the vehicle which are calculated in the foregoing manner (step S11). Specifically, when any one of the following three conditions ④ to ⑥ is satisfied, the rotational angular velocity $F_i$ is rejected:

④ $V2 < V_{TH}$ (for example, $V_{TH} = 10$ (km/h))
⑤ $|LA| > LA_{TH}$ (for example, $LA_{TH} = 0.4$ g)
⑥ $|R| < R_{TH}$ (for example, $R_{TH} = 30$ (m)).

In the foregoing manner, the rotational angular velocity $F_i$ which is likely to include an error is eliminated.

The CPU 2b then calculates the slip factor Rs as expressed by the following equation (40) on the basis of the speed $V2_i$ of each of the tires $W_i$ found in the step S10 (step S12). The slip factor Rs is used in second initialization processing in the following step S13.

$$Rs = \frac{V2_1 + V2_2}{V2_3 + V2_4} - 1 \tag{40}.$$

The second initialization processing is processing for calculating the initial correction factor $K_3$ on condition that the vehicle is cornering.

The initial correction factor $K_3$ is obtained using both the first initialization processing and the second initialization processing for two reasons. One is that the frequency of linear coasting at the time of usual traveling is relatively low, and another is to improve the precision of the initial correction factor $K_3$.

Specifically, the number of vehicles is large in a public road, so that the frequency of linear coasting at the time of usual traveling is limited. If the initial correction factor $K_3$ is calculated only at the time of linear coasting, there is a possibility that the initial correction factor $K_3$ cannot be rapidly calculated. If the second initialization processing is also used, the initial correction factor $K_3$ can be calculated if the vehicle is cornering even if it is not linearly coasting at the time of usual traveling.

Furthermore, examples of the public road include not only a road having many relatively straight roads such as a highway but also a road having many curves such as a mountain road. Consequently, the first initialization processing performed under the condition of linear coasting and the second initialization processing performed under the condition of cornering are both used, to obtain a precise initial correction factor $K_3$. More specifically, in the second initialization processing, the initial correction factor $K_3$ calculated in the second initialization processing and the initial correction factor $K_3$ calculated in the first initialization processing are compared with each other, and the initial correction factor $K_3$ which is higher in precision is taken as a final initial correction factor $K_3$. Further, the same comparison processing is also performed in the first initialization processing, and the initial correction factor $K_3$ which is higher in precision is taken as a final initial correction factor $K_3$. Consequently, a more precise initial correction factor $K_3$ is obtained.

The CPU 2b then again calculates parameters that have been calculated on the basis of an initial correction factor $BK_3$ obtained before the second initialization processing is performed using a correct initial correction factor $K_3$ (step S14). Specifically, the speeds $V2_3$ and $V2_4$ of the right and left rear tires $W_3$ and $W_4$ and the slip factor GRs are respectively calculated as expressed by the following equations (41) to (43). Consequently, the speeds $V3_3$ and $V3_4$ and the slip factor GRs from which the effect of the initial difference has been eliminated with high precision are obtained:

$$V3_3 = (K_3 / BK_3) \times V2_3 \tag{41}$$

$$V3_4 = (K_3 / BK_3) \times V2_4 \tag{42}$$

$$GRs = \{(BK_3 / K_3) \times (Rs + 1)\} - 1 \tag{43}$$

The CPU 2b then finds a judged value $\underline{D}$ for judging the drop in air pressure of the tire as expressed by the following equation (44) on the basis of the speeds $V2_1$ and $V2_2$ of the tires $W_1$ and $W_2$ and the speeds $V3_3$ and $V3_4$ of the tires $W_3$ and $W_4$ newly calculated (step S15):

$$D = \frac{\dfrac{V2_1 + V3_4}{2} - \dfrac{V2_2 + V3_3}{2}}{\dfrac{V2_1 + V2_2 + V3_3 + V3_4}{4}} \times 100 \tag{44}$$

The operation of the judged value $\underline{D}$ uses the speeds $V2_1$, $V2_2$, $V3_3$, and $V3_4$ of the respective tires $W_i$ from which the effects of the initial difference and the inner and outer wheel difference of the tire Wi have been eliminated. However, the speeds $V2_1$, $V2_2$, $V3_3$, and $V3_4$ of the tires $W_i$ vary even depending on not only the initial difference and the inner and outer wheel difference but also the lateral acceleration LA of the vehicle and the slip factor. Consequently, the effect of variation factors including the lateral acceleration LA of the vehicle and the slip factor are exerted on the judged value $\underline{D}$.

Therefore, the CPU 2b subjects the judged value $\underline{D}$ to correction for eliminating the effects of the variation factors (step S16). Specifically, a corrected value $\underline{C}$ is found by the following equation (45). In the following equation (45), A1 and A2 are factors previously stored in the ROM 2c. The factors A1 and A2 are found upon trial traveling in a case where it is known that all the tires $W_i$ have normal internal pressure.

$$C = A1 \times LA + A2 \times LA \times GRs \tag{45}$$

As expressed by the following equation (46), the corrected value $\underline{C}$ is subtracted from the judged value $\underline{D}$. Consequently, a new judged value $\underline{D'}$ from which the effects of the variation factors have been eliminated are acquired:

$$D' = D - C \tag{46}$$

The CPU 2b then judges whether or not there is a tire $W_i$ whose air pressure drops on the basis of the found judged value $\underline{D'}$ (step S17). Specifically, judgment thresholds $D_{TH1}$ and $D_{TH2}$ are set, and it is judged whether or not the judged value $\underline{D'}$ satisfies the following expression (47):

$$D' < - D_{TH1} \text{ or } D' > D_{TH2} \tag{47}$$

Although the judged value $\underline{D'}$ is found on the basis of the vehicle speeds $V2_1$, $V2_2$, $V3_3$, and $V3_4$ after the correction using the initial correction factors $K_j$ as described above, the initial correction factors $K_j$ are found by averaging processing as described later. Therefore, the larger the number of data used for averaging is, the higher the precision is. Before the initial correction factors $K_j$ having sufficient precision are found, therefore, the precision of the judged value $\underline{D}'$ is changed. Consequently, in the present embodiment, the values of the judgment thresholds $D_{TH1}$ and $D_{TH2}$ are changed depending on the precision of the initial correction factors $K_j$. Processing for changing the judgment thresholds $D_{TH1}$ and $D_{TH2}$ will be described later.

When the judged value $\underline{D}'$ satisfies the condition given by the foregoing expression (47), it is judged that the air pressure of any one of the tires drops. On the other hand, when it is judged that the judged value $\underline{D}'$ does not satisfy the condition given by the foregoing expression (47), it is judged that there is no tire whose air pressure drops.

The CPU 2b thus determines whether or not the air pressure of the tire $W_i$ drops while the vehicle is traveling. On the other hand, it makes the device more useful for a driver to report a tire $W_i$ whose air pressure drops than to merely report that there is a tire $W_i$ whose air pressure drops. Therefore, the CPU 2b specifies the tire $W_i$ whose air pressure drops.

By using the judged value $\underline{D}'$ found by the foregoing equation (44), the following can be specified:

If D' > 0, the reduced pressure tire is $W_1$ or $W_4$.
If D' < 0, the reduced pressure tire is $W_2$ or $W_3$.

Furthermore, in this case, if the vehicle is in a linearly traveling state, the following can be specified:

If $V2_1 > V2_2$, the reduced pressure tire is $W_1$.
If $V2_1 < V2_2$, the reduced pressure tire is $W_2$,
If $V3_3 > V3_4$, the reduced pressure tire is $W_3$.
If $V3_3 < V3_4$, the reduced pressure tire is $W_4$.

If the tire $W_i$ whose air pressure drops is specified, the result is displayed upon being outputted to the display 3. The display 3 comprises indicator lamps respectively corresponding to the four tires $W_1$, $W_2$, $W_3$, and $W_4$, as shown in Fig. 2, for example. When it is detected that the air pressure of any one of the tires drops, the indicator lamp corresponding to the reduced pressure tire is turned on.

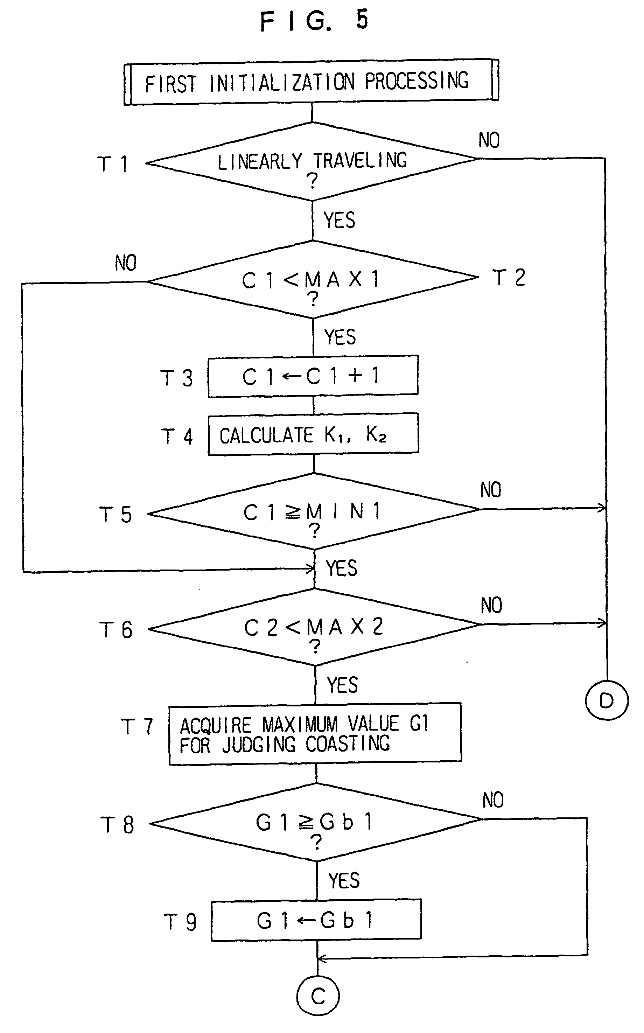

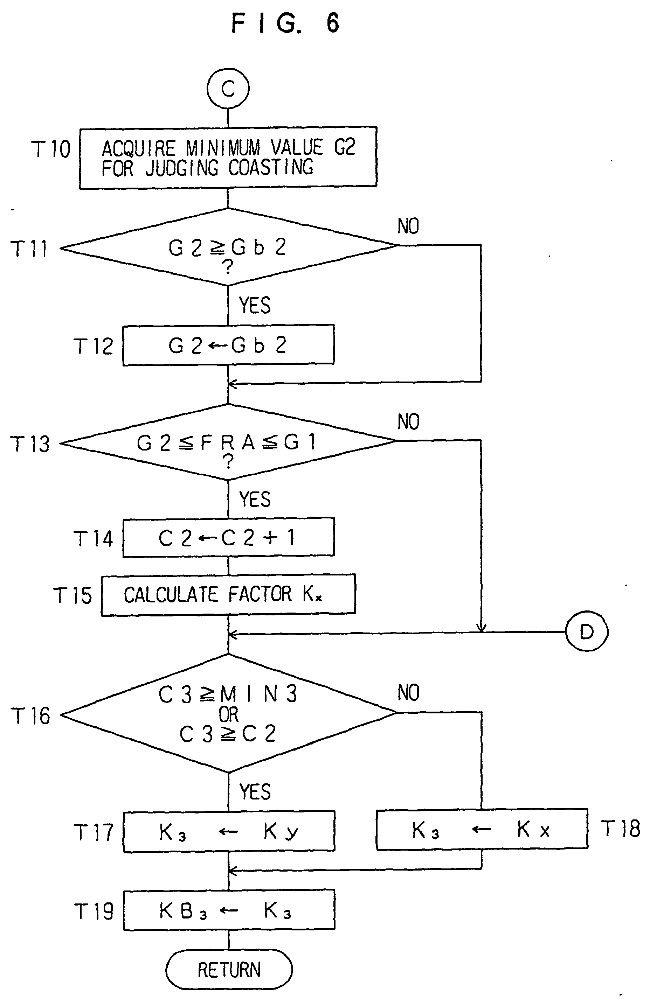

Figs. 5 and 6 are flow charts for explaining the first initialization processing. In the first initialization processing, the initial correction factors $K_j$ are found on condition that the vehicle is linearly coasting, as described above. That is, the CPU 2b judges whether or not the vehicle is linearly traveling based on whether or not the output of the steering sensor 5 is within a predetermined allowable range (corresponding to a steering angle range of $\pm 2°$, for example) (step T1 in Fig. 5). If the vehicle is not linearly traveling, the processing is terminated.

On the other hand, if the vehicle is linearly traveling, the initial correction factors $K_1$ and $K_2$ are calculated by averaging processing. More specifically, it is first judged whether or not a count value C1 of the counter 21 is not more than a predetermined maximum threshold MAX1 (for example, MAX1 = 900) (step T2). The count value C1 corresponds to the number of data used for calculating the initial correction factors $K_1$ and $K_2$, and is cleared every time the initializing switch 4 is operated.

If the count value C1 is less than the maximum threshold MAX1, the count value C1 is incremented by "1", after which the initial correction factors $K_1$ and $K_2$ are calculated as expressed by the following equations (48) and (49) (steps T3 and T4). In the following equations (48) and (49), $BK_1$ and $BK_2$ are respectively the initial correction factors $K_1$ and $K_2$ found in the preceding sampling period and stored in the RAM 2d:

$$K_1 = \frac{C1 - 1}{C1} \times BK_1 + \frac{1}{C1} \times \frac{F_1}{F_2} \tag{48}$$

$$K_2 = \frac{C1 - 1}{C1} \times BK_2 + \frac{1}{C1} \times \frac{F_3}{F_4} \tag{49}.$$

The initial correction factors $K_1$ to $K_2$ are respectively found as the average of C1 ratios of the rotational angular velocities $F_1$ and $F_2$ of the right and left front tires $W_1$ and $W_2$ and the average of C1 ratios of the rotational angular velocities $F_3$ and $F_4$ of the right and left rear tires $W_3$ and $W_4$ at the time of linear traveling of the vehicle. Consequently, it is possible to obtain a precise initial correction factor $K_1$ faithfully representing a difference in effective rolling radius between the right and left front tires $W_1$ and $W_2$, and obtain a precise initial correction factor $K_2$ faithfully representing a difference in effective rolling radius between the right and left rear tires $W_3$ and $W_4$.

The CPU 2b then judges whether or not the count value C1 is less than a predetermined minimum threshold MIN1 (for example, MIN1 = 60) (step T5). If the count value C1 is less than the minimum threshold MIN1, it is considered that the precision of the initial correction factors $K_1$ and $K_2$ is still insufficient. Therefore, the program directly proceeds to the step T16 shown in Fig. 6 without performing the processing in the steps T6 to T14 using the initial correction factors $K_1$ and $K_2$. If the count value C1 is not less than the minimum threshold MIN1, it is considered that the precision of the initial correction factors $K_1$ and $K_2$ is sufficiently given to some extent, whereby the program proceeds to the step T6.

If it is judged that the count value C1 has reached the maximum threshold MAX1 in the step T2, it is considered that the precision of the initial correction factors $K_1$ and $K_2$ is sufficient. Therefore, the program directly proceeds to the step T6 without the CPU 2b incrementing the count value C1 and calculating the initial correction factors $K_1$ and $K_2$.

The CPU 2b performs calculation processing of an initial correction factor $K_3$ in the steps T6 to T14. The calculated initial correction factor $K_3$ is taken as a final initial correction factor $K_3$ only when it is higher in precision than the initial correction factor $K_3$ calculated in second initialization processing in the preceding period. For convenience, the initial correction factor $K_3$ calculated in the first initialization processing before judging the precision is taken as an initial correction factor Kx. Further, the initial correction factor $K_3$ calculated in the second initialization processing is taken as a final initial correction factor $K_3$ only when it is higher in precision than the initial correction factor $K_3$ calculated in the first initialization processing. For convenience, therefore, the initial correction factor $K_3$ calculated before judging the precision in the second initialization processing is taken as an initial correction factor Ky.

An initial correction factor Kx is obtained as the average of initial correction factors Kx which have been calculated by the preceding sampling period, similarly to the initial correction factors $K_1$ and $K_2$. Collection of initial correction factors Kx whose number causes the precision to be sufficiently given is sufficient.

Therefore, the CPU 2b judges whether or not the count value C2 of the counter 22 is less than a predetermined maximum threshold MAX2 (for example, MAX2 = 300) (step T6). The count value C2 corresponds to the number of data used for calculating the initial correction factor Kx, and is cleared every time the initializing switch 4 is operated.

If the count value C2 reaches the maximum threshold MAX2, it is considered that the precision of the initial correction factor Kx is sufficient. Therefore, the program directly proceeds to the step T16 shown in Fig. 6 without calculating the initial correction factor $K_x$. On the other hand, if the count value C2 is less than the maximum threshold MAX2, calculation processing of the initial correction factor Kx is performed.

The initial correction factor Kx represents a difference in effective rolling radius between the front tire $W_1$ and the rear tires $W_3$. If the driving tires $W_1$ and $W_2$ slip at the time of driving or at the time of braking, the precision is decreased. Therefore, the CPU 2b performs judgment processing as to whether or not the vehicle is coasting prior to calculating the initial correction factor Kx (steps T7 to T13).

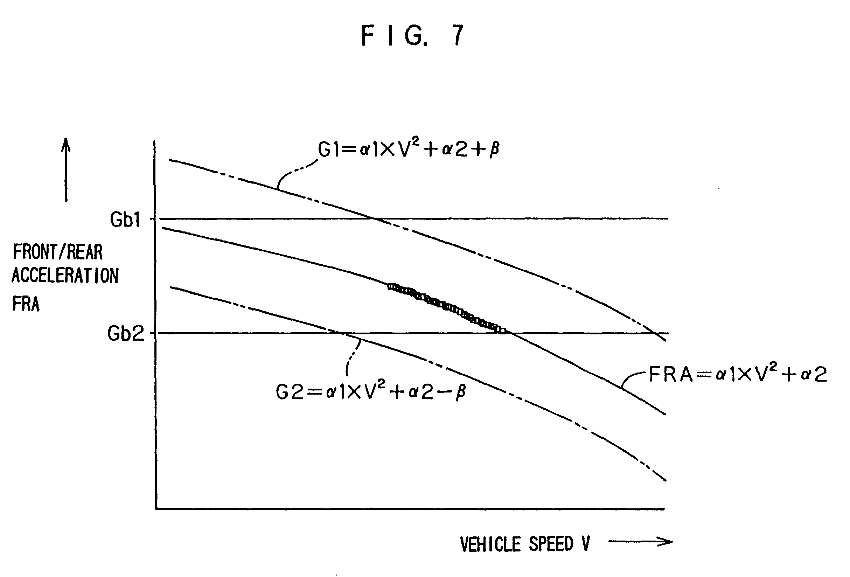

It is judged whether or not the vehicle is coasting depending on whether or not the front/rear acceleration FRA of the vehicle is within a predetermined coasting range. The coasting range takes a maximum value and a minimum value which differ depending on the vehicle speed. Specifically, the higher the vehicle speed is, the narrower the coasting range becomes, as shown by Fig. 7. In the present embodiment, therefore, it can be reliably judged whether or not the vehicle is coasting irrespective of the vehicle speed by previously finding the coasting range corresponding to the vehicle speed.

The coasting range corresponding to the vehicle speed is acquired by causing the vehicle to coast on a straight level road by trial. More specifically, the vehicle speed at the time of coasting and the front/rear acceleration of the vehicle are calculated. Such work is performed with respect to various vehicle speeds, so that a lot of data are collected. A method of least squares is applied to the data, to find a quadratic expression as given by the following equation (50). In the following equation (50), $\alpha 1$ and $\alpha 2$ are constants:

$$FRA = \alpha 1 \times V^2 + \alpha 2 \tag{50}$$

Furthermore, quadratic expressions obtained by shifting the quadratic expression by $\beta$ (for example, $\beta = 0.2$ g) in both positive and negative directions are found. They are respectively expressed by the following equations (51) and (52):

$$G1 = \alpha 1 \times V^2 + \alpha 2 + \beta \tag{51}$$

$$G2 = \alpha 1 \times V^2 + \alpha 2 - \beta \tag{52}$$

The range put between the quadratic expressions is the oasting range. The two quadratic expressions representing the coasting range are stored in the EEPROM 2e.

On the other hand, strictly speaking, the vehicle which is being coasting should be in a decelerated state to some extent. Consequently, in view of the principle, the maximum value Gb1 of acceleration at which it can be judged that the vehicle is coasting is zero. The minimum value Gb2 of acceleration at which it can be judged that the vehicle is coasting is set to a suitable value (for example, -0.04 g). The maximum value Gb1 and the minimum value Gb2 are stored in the EEPROM 2e, similarly to the two quadratic expressions representing the coasting range.

The CPU 2b substitutes the vehicle speed $\underline{V}$ found in the step S2 shown in Fig. 3 into the foregoing equation (51) in the step T7. Consequently, the maximum value G1 is acquired. It is judged whether or not the maximum value G1 is not less than the maximum value Gb1 (step T8). If the maximum value G1 is not less than the maximum value Gb1, the maximum value is forcedly corrected to Gb1 (step T9). On the other hand, if the maximum value G1 is less than the maximum value Gb1, G1 is taken as the maximum value as it is.

The CPU 2b then substitutes the vehicle speed $\underline{V}$ into the foregoing equation (49). As a result, the minimum value G2 is acquired (step T10 in Fig. 6). It is judged whether or not the acquired minimum value G2 is not less than the minimum value Gb2 (step T11). If the minimum value G2 is not less than the minimum value Gb2, the minimum value is forcedly corrected to Gb2 (step T12). On the other hand, if the minimum value G2 is less than the minimum value Gb2, G2 is taken as the minimum value as it is.

The coasting range in the current sampling period is thus obtained.

The CPU 2b then judges whether or not the front/rear acceleration FRA of the vehicle which is calculated in the current sampling period is within the obtained coasting range (step T13).

If the front/rear acceleration FRA of the vehicle which is calculated in the current sampling period is not within the coasting range, it cannot be considered that the vehicle is coasting. Therefore, the program directly proceeds to the step T16 without calculating the initial correction factor Kx. On the other hand, if the front/rear acceleration FRA of the vehicle is within the coasting range, the count value C2 is incremented by "1", and the initial correction factor Kx is calculated as expressed by the following equation (53) (steps T14 and T15). In the following equation (53), BKx is an initial correction factor Kx calculated in the preceding sampling period and stored in the RAM 2d:

$$Kx = \frac{C2 - 1}{C2} \times BKx + \frac{1}{C2} \times \frac{F_1 + K_1 \times F_2}{F_3 + K_2 \times F_4} \tag{53}.$$

The CPU 2b then compares the calculated initial correction factor Kx with the initial correction factor Ky calculated in the second initialization processing in the preceding sampling period in order to obtain the final initial correction factor $K_3$. As a criterion for comparison, the count value C2 of the counter 22 corresponding to the number of data used for calculating the initial correction factor Kx and a count value C3 of the counter 23 corresponding to the number of data used for calculating the initial correction factor Ky are used. That is, the larger the number of data used for averaging is, the higher the precision is because the effect of noise can be eliminated.

Therefore, the CPU 2b judges whether or not the count value C3 of the counter 23 is not less than a predetermined minimum value MIN3 (for example, MIN3 = 50) or whether or not the count value C3 is not less than the count value C2 (step T16).

If the count value C3 is not less than the minimum threshold MIN3, or the count value C3 is not less than the count value C2, it is considered that the initial correction factor Ky is higher in precision than the initial correction factor Kx, whereby the initial correction factor Ky is selected as a final initial correction factor $K_3$ (step T17). On the other hand, if the count value C3 is less than the minimum threshold MIN3, and the count value C3 is less than the count value C2, it is considered that the initial correction factor Kx is higher in precision than the initial correction factor Ky, whereby the initial correction factor Kx is selected as the final initial correction factor $K_3$ (step T18). The selected initial correction factor $K_3$ is stored as an initial correction factor $BK_3$ in the RAM 2d (step T19).

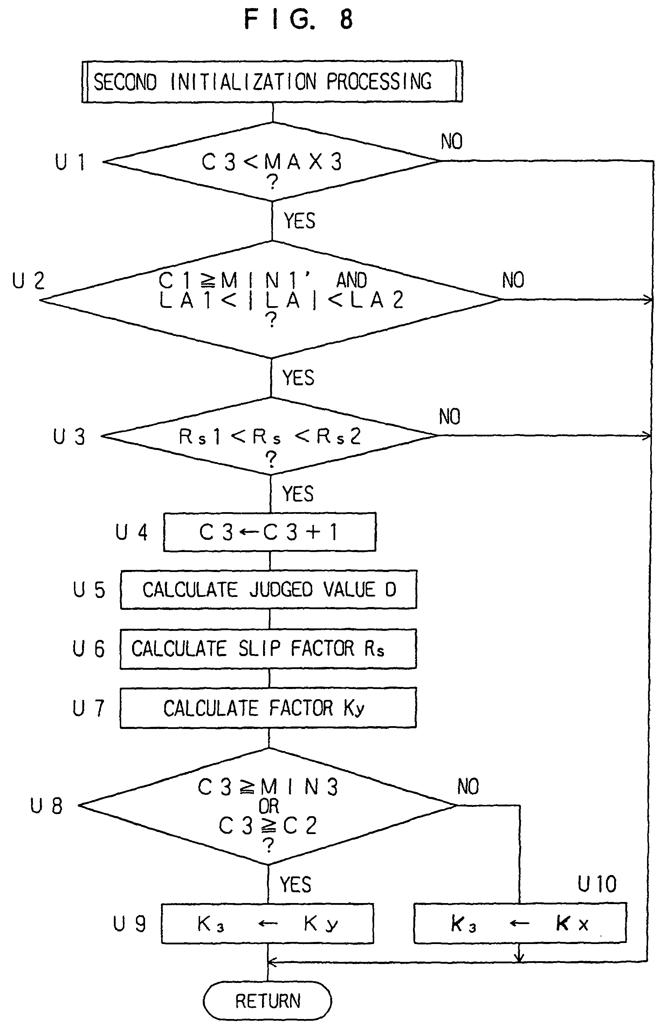

Fig. 8 is a flow chart for explaining the second initialization processing. In the second initialization processing, the initial correction factor $K_y$ is calculated by averaging past initial correction factors Ky which have been calculated by the preceding sampling period. Therefore, the CPU 2b judges whether or not the count value C3 of the counter 23 is less than a predetermined maximum threshold MAX3 (for example, MAX3 = 150) (step U1). If the count value C3 reaches the maximum threshold MAX3, it is considered that the initial correction factor Ky is the average of data whose number causes the precision to be sufficiently given, whereby the processing is terminated. On the other hand, if the count value C3 is less than the maximum threshold MAX3, the program proceeds to processing in the subsequent step U2.

The CPU 2b judges whether or not the vehicle is cornering, and the count value C1 is not less than the minimum threshold MIN1' (for example, MIN1' = 300).

It is judged whether or not the vehicle is cornering depending on whether or not the lateral acceleration LA of the vehicle satisfies the condition given by the following expression (54). In the following expression (54), LA1 = 0.08g, and LA2 = 0.4g:

$$LA1 < |LA| < LA2 \tag{54}$$

The reason why judgment whether or not the count value C1 is not less than the minimum threshold MIN1' is used as one of criteria for judgment is that the initial correction factors $K_1$ and $K_2$ are used for calculating the lateral acceleration LA of the vehicle, as expressed by the foregoing equations (39), (38), (34) to (37), and (24) to (27). That is, the larger the number of data used for averaging is, the higher the precision of the initial correction factors $K_1$ and $K_2$ is. If the number of data is small, therefore, the precision of the lateral acceleration LA of the vehicle is not sufficiently given. In this case, erroneous judgment may be made in the step U2, accordingly. Further, if the precision of the lateral acceleration LA of the vehicle is low, the precision of the initial correction factor Ky found by the following equation (56) is also decreased.

The lateral acceleration LA of the vehicle can be also obtained from the output of the steering sensor 5 and the vehicle speed. The lateral acceleration LA of the vehicle thus obtained has no relation with the initial correction factors $K_1$ and $K_2$. In this case, therefore, the necessity of the criterion for judgment whether or not the count value C1 is not less than the minimum threshold MIN1' is eliminated.

If the vehicle is not cornering, or the count value C1 is less than the minimum threshold MIN1', it is considered that the initial correction factor Ky cannot be calculated with high precision, whereby the processing is terminated. On the other hand, if the vehicle is cornering, and the count value C1 is not less than the minimum threshold MIN1', the program proceeds to the subsequent step U3.

The CPU 2b judges whether or not the slip factor Rs of the driving tires $W_1$ and $W_2$ calculated in the step S12 shown in Fig. 4 satisfies the following expression (55) in the step U3. The judgment processing is based on the discovery of the inventors of the present application that the precision of the initial correction factor Ky is decreased when the slip factor Rs does not satisfy the following expression (55). In the following expression (55), Rs1 and Rs2 are constants, and Rs1 = 0 and Rs2 = 0.008, for example:

$$Rs1 < Rs < Rs2 \tag{55}$$

If the foregoing expression (55) is not satisfied, the processing is terminated. On the other hand, if the foregoing expression (55) is satisfied, the count value C3 of the counter 23 is incremented by "1", and the judged value $\underline{D}$ and the slip factor Rs are calculated. Further, the initial correction factor Ky is calculated on the basis of the judged value D and the slip factor Rs which are calculated (steps U4, U5, U6, and U7).

More specifically, the initial correction factor Ky is calculated in accordance with the following equation (56) derived from an equation obtained by modifying a correction expression for correcting cornering relating to the judged value $\underline{D}$ and an expression for calculating the slip factor Rs. In the following equation (56), BKy is an initial correction factor Ky calculated in the preceding sampling period and stored in the RAM 2d:

$$Ky = \frac{C3 - 1}{C3} \times BKy + \frac{1}{C3} \times \frac{1}{Rs + 1} \times \frac{F_1 + K_1 \times F_2}{F_3 + K_2 \times F_4} \tag{56}$$

The judged value $\underline{D}$ is calculated as in the foregoing equation (44). Further, the slip factor Rs is calculated in accordance with the forgoing equation (12) on the basis of the judged value $\underline{D}$ and the lateral acceleration LA of the vehicle which are calculated.

Thereafter, the CPU 2b substitutes the calculated slip factor Rs into the foregoing equation (56). Consequently, the initial correction factor Ky is obtained.

The CPU 2b then compares the precision of the calculated initial correction factor Ky with the precision of the initial correction factor Kx calculated in the first initialization processing in the current sampling period in order to obtain the final initial correction factor $K_3$. As a criterion for comparison, the count value C2 of the counter 22 corresponding to the number of data used for calculating the initial correction factor Kx and the count value C3 of the counter 23 corresponding to the number of data used for calculating the initial correction factor Ky are used, as in the first initialization processing. That is, the CPU 2b judges whether or not the count value C3 of the counter 23 is not less than the minimum threshold MIN3, or the count value C3 is not less than the count value C2 (step U8).

If the count value C3 is not less than the minimum threshold MIN3, or the count value C3 is not less than the count value C2, it is considered that the initial correction factor Ky is higher in precision than the initial correction factor Kx, whereby the initial correction factor Ky is selected as the final initial correction factor $K_3$ (step U9). On the other hand, if the count value C3 is less than the minimum threshold MIN3, and the count value C3 is less than the count value C2, it is considered that the initial correction factor Kx is higher in precision than the initial correction factor Ky, whereby the initial correction factor Kx is selected as the final initial correction factor $K_3$ (step U10).

Description is now made of processing for changing the judgment thresholds $D_{TH1}$ and $D_{TH2}$ used in the air pressure drop judgment processing in the step S17 shown in Fig. 4. As described in the foregoing, the judgment thresholds $D_{TH1}$ and $D_{TH2}$ are changed depending on the precision of the initial correction factor $K_j$. The precision of the initial correction factor $K_j$ is represented by the number of data used for calculating the initial correction factor $K_j$, as described in the first initialization processing and the second initialization processing. In the processing for changing the judgment thresholds $D_{TH1}$ and $D_{TH2}$, therefore, the count values C1, C2, and C3 of the counters 21, 22, and 23 are used as parameters for judging the precision of the initial correction factor $K_j$.

The CPU 2b judges whether or not the first condition under which the count value C1 reaches the maximum threshold MAX1, and the count value C3 reaches the maximum threshold MAX3 is satisfied. That is, it is judged whether or not the calculation of the initial correction factor $K_j$ is terminated.

The reason why in the first condition, the count value C3 corresponding to the number of data used for calculating the initial correction factor Ky is used as a criterion for judgment whether or not the calculation of the initial correction factor $K_3$ is terminated is that the precision of the initial correction factor Kx is decreased at the time of climbing. That is, even if the front/rear acceleration FRA of the vehicle is in the coasting range at the time of climbing, driving forces are transmitted to the driving tires $W_1$ and $W_2$, whereby the vehicle is not actually coasting. In this case, therefore, the precision of the initial correction factor Kx is low.

If the first condition is satisfied, it is considered that the precision of the initial correction factor $K_j$ is sufficient, whereby a reference value $D_0$ (for example, $D_0 = 0.1$) is set as the judgment thresholds $D_{TH1}$ and $D_{TH2}$. On the other hand, if the first condition is not satisfied, the CPU 2b examines whether the precision of the initial correction factor $K_j$ is relatively high or low or too low to judge the drop in air pressure.

Specifically, the CPU 2b first judges whether or not the second condition under which the count value C1 is not less than $m_1$ (for example, $m_1 = 2 / 3$) times the maximum threshold MAX1, and the count value C3 is not less than $m_1$ times the maximum threshold MAX3 is satisfied in order to examine whether or not the precision of the initial correction factor $K_j$ is relatively high. If the second condition is satisfied, it is considered that the precision of the initial correction factor $K_j$ is relatively high, whereby a value which is $n_1$ (for example, $n_1 = 1.33$) times the reference value $D_0$ is set as the judgment thresholds $D_{TH1}$ and $D_{TH2}$.

On the other hand, if the second condition is not satisfied, it is then judged whether or not the third condition under which the count value C1 is more than $m_2$ ($m_2 < m_1$ ; $m_2 = 1 / 3$, for example) times the maximum threshold MAX1, and the count value C2 is not less than $m_2$ times the maximum threshold MAX2, or the count value C3 is not less than $m_2$ times the maximum threshold MAX3 is satisfied in order to examine whether the precision of the initial correction factor $K_j$ is relatively low or too low.

If the third condition is satisfied, it is considered that the precision of the initial correction factor $K_j$ is relatively low but is not too low, whereby a value which is $n_2$ ($n_2 > n_1$ ; $n_2 = 1.66$, for example) times the reference value $D_0$ is set as the judgment thresholds $D_{TH1}$ and $D_{TH2}$. On the other hand, if the third condition is not satisfied, it is considered that the precision of the initial correction factor $K_j$ is too low, whereby the judgment thresholds $D_{TH1}$ and $D_{TH2}$ are not set. In this case, no air pressure drop judgment processing is performed.

As described in the foregoing, according to the present embodiment, when the vehicle is in usual traveling, it is detected that the vehicle is linearly traveling. At this time, the initial correction factors $K_1$ and $K_2$ are calculated. Further, when the vehicle is in usual traveling, it is detected that the vehicle is linearly coasting. At this time, the initial correction factor Kx is calculated. Further, when the vehicle is in usual traveling, it is detected that the vehicle is cornering. At this time, the initial correction factor Ky is calculated. One of the initial correction factors Kx and Ky which is higher in precision is taken as the final initial correction factor $K_3$.

Even if the user does not intentionally cause the vehicle to linearly coast, therefore, it is possible to obtain precise initial correction factors $K_j$. Moreover, with respect to the initial correction factor $K_3$, one of the initial correction factors Kx and Ky, which is higher in precision, respectively calculated in different traveling states is taken as the initial correction factor $K_3$, whereby the precision thereof is higher, as compared with that in a case where only the calculated value in either one of the traveling states is used.

The precise initial correction factor $K_j$ can be thus simply obtained. Therefore, it is possible to significantly reduce the burden on the user as well as to improve the traffic safety.

Although description has been made of one embodiment of the present invention, the present invention is not limited to the above-mentioned embodiment. In the above-mentioned embodiment, processing for calculating the initial correction factor Kx is used when the vehicle is linearly coasting, while processing for calculating the initial correction factor Ky is used in a case where the vehicle is cornering, and one of the initial correction factors Kx and Ky which is higher in precision is selected as the final initial correction factor $K_3$. However, only either one of the two processing may be performed, and the initial correction factor Kx or Ky may be used as the initial correction factor $K_3$ as it is. Further, the user may be manually selectable as to which of the processing should be performed. Even by such construction, it is possible to simply calculate the precise initial correction factor $K_3$.

Although the present invention has been described and illustrated in detail, it is clearly understood that the description is by way of illustration and example only and is not to be taken by way of limitation.

**Claims**

1. A device for operating a correction factor for correcting an output of rotational angular velocity detecting means (1) for detecting the rotational angular velocities of four tires mounted on a vehicle, the device comprising:

   - means (T1) for judging whether or not the vehicle is linearly traveling; and
   - means (T4) for calculating, if it is judged that the vehicle is linearly traveling, an initial correction factor ($K_1$) for eliminating an effect of a difference in effective rolling radius depending on an initial difference between right and left front tires on the rotational angular velocities of the tires and an initial correction factor ($K_2$) for eliminating an effect of a difference in effective rolling radius depending on an initial difference between right and left rear tires on the rotational angular velocities of the tires on the basis of the output of the rotational angular velocity detecting means (1)

      **characterized by**

   - means (U3) for judging whether or not the vehicle is cornering,
   - means (U6) for finding a slip factor (Rs) of the tire, and
   - means (U7) for calculating, if it is judged that the vehicle is cornering, an initial correction factor ($K_3$ or Ky, respectively), for eliminating an effect of a difference in effective rolling radius depending on an initial difference between the front tire and the rear tire on the rotational angular velocities of the tires by substituting the output of the rotational angular velocity detecting means (1), the calculated initial correction factors ($K_1$ and $K_2$), and the calculated slip factor (Rs) into a predetermined operation expression.

2. A device according to claim 1, further comprising:

   - means (U5) for calculating a judged value (D) for judging a drop in air pressure of the tire on the basis of the output of the rotational angular velocity detecting means (1),
   - the means (U6) for finding the slip factor (Rs) are arranged for substituting a lateral acceleration (LA) of the vehicle and the judged value (D) into a predetermined operation expression, to find the slip factor (Rs) of the tire.

3. A device according to claim 2, further comprising:

   - means (S10) for calculating a lateral acceleration (LA) of the vehicle on the basis of the output of the rotational angular velocity detecting means (1).

4. A device according to any one of claims 1 to 3, further comprising:

   - means (U3) for judging whether or not the slip factor (Rs) takes a value within a predetermined range, and
   - means (U3) for inhibiting the calculation of the initial correction factor ($K_3$) if it is judged that the slip factor (Rs) takes a value within the predetermined range.

5. A device according to claim 1, further comprising:

   - means (T13) for judging whether or not the vehicle is coasting,
   - means (T15) for calculating, if it is judged that the vehicle is linearly travelling and it is judged that the vehicle is coasting, an initial correction factor (Kx) for eliminating an effect of a difference in effective rolling radius depending on an initial difference between the front tire and the rear tire on the rotational angular velocities of the tires on the basis of the calculated initial correction factors ($K_1$ and $K_2$) and the output of the rotational angular velocity detecting means;
   - means (T16, U8) for judging which of the calculated initial correction factors (Kx and Ky) is higher in precision, and
   - means (T17, T18, U9, U10) for taking the initial correction factor which is judged to be higher in precision as a final initial correction factor ($K_3$) for eliminating the effect of the difference in effective rolling radius depending on the initial difference between the front tire and the rear tire on the rotational angular velocities of the tires

**6.** A device according to claim 5, further comprising

- means (U5) for calculating a judged value (D) for judging a drop in air pressure of the tire on the basis of the output of the rotational angular velocity detecting means (1),
- the means (U6) for finding the slip factor (Rs) substituting a lateral acceleration (LA) of the vehicle and the calculated judged value (D) into a predetermined operation expression, to find the slip factor (Rs) of the tire.

**7.** A device according to claim 5, further comprising:

- means (S10) for calculating a lateral acceleration (LA) of the vehicle on the basis of the output of the rotational angular velocity detecting means (1),
- means (U5) for calculating a judged value (D) for judging a drop in air pressure of the tire on the basis of the output of the rotational angular velocity detecting means (1),
- means (U6) for substituting the lateral acceleration (LA) of the vehicle and the judged value (D) thus calculated into a predetermined first operation expression, to calculate the slip factor (Rs) of the tire, wherein
- the means (U2) for judging whether or not the vehicle is cornering make this judgement on the basis of the calculated lateral acceleration (LA) of the vehicle

**8.** A device according to any one of claims 5 to 7, further comprising:

- means (U3) for judging whether or not the slip factor (Rs) takes a value within a predetermined range, and
- means (U3) for inhibiting the calculation of the initial correction factor ($K_3$) if it is judged that the slip factor (Rs) takes a value within the predetermined range.

**9.** A device according to any one of claims 5 to 8, wherein

- the means (T15) for calculating the initial correction factor (Kx) includes means for subjecting a plurality of data to an average operation,
- the means (U7) for calculating the initial correction factor (Ky) includes means for subjecting a plurality of data to an average operation, and
- the means (T16, U8) for judging which of the initial correction factors (Kx and Ky) is higher in precision includes means for judging the precision on the basis of the numbers of the data which have been subjected to the respective average operations.

**Patentansprüche**

**1.** Vorrichtung für die Verarbeitung eines Korrekturfaktors zum Korrigieren eines Ausgangssignals einer Drehwinkelgeschwindigkeits-Erfassungseinrichtung (1) zum Erfassen der Drehwinkelgeschwindigkeiten von vier Reifen, die an einem Fahrzeug angebracht sind, wobei die Vorrichtung folgendes aufweist:

- eine Einrichtung (T1) zum Beurteilen, ob das Fahrzeug geradeaus fährt oder nicht; und
- eine Einrichtung (T4), um im Fall der Entscheidung, daß das Fahrzeug geradeaus fährt, einen anfänglichen Korrekturfaktor ($K_1$) zu berechnen zum Eliminieren einer Auswirkung einer Differenz in dem wirksamen Rollradius in Abhängigkeit von einer anfänglichen Differenz zwischen dem rechten und dem linken Vorderreifen auf die Drehwinkelgeschwindigkeiten der Reifen, sowie einen anfänglichen Korrekturfaktor ($K_2$) zu berechnen zum Eliminieren einer Auswirkung einer Differenz in dem wirksamen Rollradius in Abhängigkeit von einer anfänglichen Differenz zwischen dem rechten und dem linken Hinterreifen auf die Drehwinkelgeschwindigkeiten der Reifen auf der Basis des Ausgangssignals der Drehwinkelgeschwindigkeits-Erfassungseinrichtung (1),

**gekennzeichnet durch**

- eine Einrichtung (U3) zum Beurteilen, ob das Fahrzeug eine Kurve fährt oder nicht,
- eine Einrichtung (U6) zum Finden eines Schlupffaktors (Rs) des Reifens, und
- eine Einrichtung (U7), um im Fall der Entscheidung, daß das Fahrzeug eine Kurve fährt, einen anfänglichen Korrekturfaktor ($K_3$ bzw. $K_4$) zu berechnen zum Eliminieren einer Auswirkung einer Differenz in dem wirksamen Rollradius in Abhängigkeit von einer anfänglichen Differenz zwischen dem Vorderreifen und dem Hinterreifen auf die Drehwinkelgeschwindigkeiten der Reifen **durch** Einsetzen des Ausgangssignals der Drehwinkelgeschwindigkeits-Erfassungseinrichtung (1), der berechneten anfänglichen Korrekturfaktoren ($K_1$ und $K_2$) und des berechneten Schlupffaktors (Rs) in einen vorbestimmten Operationsausdruck.

2. Vorrichtung nach Anspruch 1,
die weiterhin folgendes aufweist:

- eine Einrichtung (U5) zum Berechnen eines Beurteilungswerts (D) zum Beurteilen eines Luftdruckabfalls des Reifens auf der Basis des Ausgangssignals der Drehwinkelgeschwindigkeits-Erfassungseinrichtung (1),
- wobei die Einrichtung (U2) zum Finden des Schlupffaktors (Rs) dazu ausgebildet ist, eine Querbeschleunigung (LA) des Fahrzeugs und den Beurteilungswert (D) in einen vorbestimmten Operationsausdruck einzusetzen, um den Schlupffaktor (Rs) des Reifens zu finden.

3. Vorrichtung nach Anspruch 2,
die weiterhin folgendes aufweist:

- eine Einrichtung (S10) zum Berechnen einer Querbeschleunigung (LA) des Fahrzeugs auf der Basis des Ausgangssignals der Drehwinkelgeschwindigkeits-Erfassungseinrichtung (1).

4. Vorrichtung nach einem der Ansprüche 1 bis 3,
die weiterhin folgendes aufweist:

- eine Einrichtung (U3) zum Beurteilen, ob der Schlupffaktor (Rs) einen Wert innerhalb eines vorbestimmten Bereichs annimmt oder nicht, und
- eine Einrichtung (U3) zum Unterbinden der Berechnung des anfänglichen Korrekturfaktors ($K_3$) im Fall der Entscheidung, daß der Schlupffaktor (Rs) einen Wert innerhalb des vorbestimmten Bereichs annimmt.

5. Vorrichtung nach Anspruch 1,
die weiterhin folgendes aufweist:

- eine Einrichtung (T13) zum Beurteilen, ob das Fahrzeug im Leerlauf fährt oder nicht,
- eine Einrichtung (T15), um im Fall der Entscheidung, daß das Fahrzeug geradeaus fährt, sowie im Fall der Entscheidung, daß das Fahrzeug im Leerlauf fährt, einen anfänglichen Korrekturfaktor (Kx) zu berechnen, um eine Auswirkung einer Differenz in dem wirksamen Rollradius in Abhängigkeit von einer anfänglichen Differenz zwischen dem Vorderreifen und dem Hinterreifen auf die Drehwinkelgeschwindigkeiten der Reifen auf der Basis der berechneten anfänglichen Korrekturfaktoren ($K_1$ und $K_2$) und des Ausgangssignals der Drehwinkelgeschwindigkeits-Erfassungseinrichtung zu eliminieren;
- eine Einrichtung (T16, U8) zum Beurteilen, welcher der berechneten anfänglichen Korrekturfaktoren (Kx und Ky) eine höhere Genauigkeit hat; und
- eine Einrichtung (T17, T18, U9, U10) zum Verwenden des anfänglichen Korrekturfaktors, der als der Korrekturfaktor mit der höheren Genauigkeit beurteilt wird, als endgültigen Korrekturfaktor ($K_3$) zum Eliminieren der Auswirkung der Differenz in dem wirksamen Rollradius in Abhängigkeit von der anfänglichen Differenz zwischen dem Vorderreifen und dem Hinterreifen auf die Drehwinkelgeschwindigkeiten der Reifen.

6. Vorrichtung nach Anspruch 5,
die weiterhin folgendes aufweist:

- eine Einrichtung (U5) zum Berechnen eines Beurteilungswerts (D) zum Beurteilen eines Luftdruckabfalls des Reifens auf der Basis des Ausgangssignals der Drehwinkelgeschwindigkeits-Erfassungseinrichtung (1),
- wobei die Einrichtung (U6) zum Finden des Schlupffaktors (Rs) eine Querbeschleunigung (LA) des Fahrzeugs und den Beurteilungswert (D) in einen vorbestimmten Operationsausdruck einsetzt, um den Schlupffaktor (Rs) des Reifens zu finden.

7. Vorrichtung nach Anspruch 5,
die weiterhin folgendes aufweist:

- eine Einrichtung (S 10) zum Berechnen einer Querbeschleunigung (LA) des Fahrzeugs auf der Basis des Ausgangssignals der Drehwinkelgeschwindigkeits-Erfassungseinrichtung (1),
- eine Einrichtung (U5) zum Berechnen eines Beurteilungswerts (D) zum Beurteilen eines Luftdruckabfalls des Reifens auf der Basis des Ausgangssignals der Drehwinkelgeschwindigkeits-Erfassungseinrichtung (1),
- eine Einrichtung (U6) zum Einsetzen der Querbeschleunigung (LA) des Fahrzeugs und des Beurteilungswerts (D), die auf diese Weise berechnet worden sind, in einen vorbestimmten ersten Operationsausdruck, um den Schlupffaktor (Rs) des Reifens zu berechnen, wobei
- die Einrichtung (U2) zum Beurteilen, ob das Fahrzeug eine Kurve fährt oder nicht, diese Beurteilung auf der Basis des berechneten Querbeschleunigung (LA) des Fahrzeugs vornimmt.

8.  Vorrichtung nach einem der Ansprüche 5 bis 7,
    die weiterhin folgendes aufweist:

    - eine Einrichtung (U3) zum Beurteilen, ob der Schlupffaktor (Rs) einen Wert innerhalb eines vorbestimmten Bereichs annimmt oder nicht, und
    - eine Einrichtung (U3) zum Unterbinden der Berechnung des anfänglichen Korrekturfaktors (K$_3$) im Fall der Entscheidung, daß der Schlupffaktor (Rs) einen Wert innerhalb des vorbestimmten Bereichs annimmt.

9.  Vorrichtung nach einem der Ansprüche 5 bis 8,
    wobei

    - die Einrichtung (T15) zum Berechnen des anfänglichen Korrekturfaktors (Kx) eine Einrichtung aufweist, um eine Vielzahl von Daten einer Mittelungs-Operation zu unterziehen,
    - die Einrichtung (U7) zum Berechnen des anfänglichen Korrekturfaktors (Ky) eine Einrichtung aufweist, um eine Vielzahl von Daten einer Mittelungs-Operation zu unterziehen, und
    - die Einrichtung (T16, U8) zum Beurteilen, welcher der anfänglichen Korrekturfaktoren (Kx und Ky) höhere Genauigkeit aufweist, eine Einrichtung zum Beurteilen der Genauigkeit auf der Basis der Anzahlen der Daten aufweist, die den jeweiligen Mittelungs-Operationen unterzogen worden sind.


**Revendications**

1.  Dispositif pour mettre en application un facteur de correction pour corriger une sortie de moyens de détection de la vitesse de rotation angulaire (1) pour détecter les vitesses de rotation angulaires de quatre pneus montés sur un véhicule, le dispositif comprenant :

    - des moyens (T1) pour estimer si le véhicule se déplace ou pas de manière linéaire ; et
    - des moyens (T4) pour calculer, si on estime que le véhicule se déplace de manière linéaire, un facteur initial de correction (K$_1$) pour éliminer un effet d'une différence de rayon de roulement effectif selon une différence initiale entre les pneus avant droit et gauche sur les vitesses de rotation angulaires des pneus et un facteur initial de correction (K$_2$) pour éliminer un effet d'une différence de rayon de roulement effectif selon une différence initiale entre les pneus arrière droit et gauche sur les vitesses de rotation angulaires des pneus sur la base de la sortie des moyens de détection de la vitesse de rotation angulaire (1),

        **caractérisé par**

    - des moyens (U3) pour estimer si le véhicule prend ou pas un virage ;
    - des moyens (U6) pour trouver un facteur de glissement (Rs) du pneu, et
    - des moyens (U7) pour calculer, si on estime que le véhicule prend un virage, un facteur initial de correction (K$_3$ ou Ky, respectivement), pour éliminer un effet d'une différence de rayon de roulement effectif selon une différence initiale entre le pneu avant et le pneu arrière sur les vitesses de rotation angulaires des pneus en substituant la sortie des moyens de détection de la vitesse de rotation angulaire (1), les facteurs initiaux de correction calculés (K$_1$ et K$_2$), et le facteur de glissement calculé (Rs) dans une expression d'opération prédéterminée.

2.  Dispositif selon la revendication 1,
    comprenant de plus :

    - des moyens (U5) pour calculer une valeur estimée (D) pour estimer une baisse de la pression d'air du pneu sur la base de la sortie des moyens de détection de la vitesse de rotation angulaire (1) ;
    - les moyens (U6) pour trouver le facteur de glissement (Rs) sont agencés pour substituer une accélération latérale (LA) du véhicule et la valeur estimée (D) dans une expression d'opération prédéterminée, afin de trouver le facteur de glissement (Rs) du pneu.

3.  Dispositif selon la revendication 2,
    comprenant de plus :

    -   des moyens (S 10) pour calculer une accélération latérale (LA) du véhicule sur la base de la sortie des moyens de détection de la vitesse de rotation angulaire (1).

4.  Dispositif selon l'une quelconque des revendications 1 à 3, comprenant de plus :

    -   des moyens (U3) pour estimer si le facteur de glissement (Rs) prend ou pas une valeur située à l'intérieur d'une plage prédéterminée, et
    -   des moyens (U3) pour empêcher le calcul du facteur initial de correction ($K_3$) si on estime que le facteur de glissement (Rs) prend une valeur située à l'intérieur de la plage prédéterminée.

5.  Dispositif selon la revendication 1,
    comprenant de plus :

    -   des moyens (T13) pour estimer si le véhicule circule ou pas à vitesse de croisière ;
    -   des moyens (T15) pour calculer, si on estime que le véhicule se déplace de manière linéaire et si on estime que le véhicule circule à vitesse de croisière, un facteur initial de correction (Kx) pour éliminer un effet d'une différence de rayon de roulement effectif selon une différence initiale entre le pneu avant et le pneu arrière sur les vitesses de rotation angulaires des pneus sur la base des facteurs initiaux de correction calculés ($K_1$ et $K_2$) et la sortie des moyens de détection de la vitesse de rotation angulaire ; des moyens (T16, U8) pour estimer lequel des facteurs initiaux de correction calculés (Kx et Ky) présente la précision la plus élevée : et
    -   des moyens (T17, T18, U9, U10) pour prendre le facteur initial de correction qui est estimé présenter la précision la plus élevée, comme facteur initial de correction final ($K_3$) pour éliminer l'effet de la différence de rayon de roulement effectif selon la différence initiale entre le pneu avant et le pneu arrière sur les vitesses de rotation angulaires des pneus.

6.  Dispositif selon la revendication 5,
    comprenant de plus :

    -   des moyens (U5) pour calculer une valeur estimée (D) pour estimer une baisse de la pression d'air du pneu sur la base de la sortie des moyens de détection de la vitesse de rotation angulaire (1),
    -   les moyens (U6) pour trouver le facteur de glissement (Rs) en substituant une accélération latérale (LA) du véhicule et la valeur estimée calculée (D) dans une expression d'opération prédéterminée, afin de trouver le facteur de glissement (Rs) du pneu.

7.  Dispositif selon la revendication 5,
    comprenant de plus :

    -   des moyens (S10) pour calculer une accélération latérale (LA) du véhicule sur la base de la sortie des moyens de détection de la vitesse de rotation angulaire (1),
    -   des moyens (U5) pour calculer une valeur estimée (D) pour estimer une baisse de la pression d'air du pneu sur la base de la sortie des moyens de détection de la vitesse de rotation angulaire (1),
    -   des moyens (U6) pour substituer l'accélération latérale (LA) du véhicule et la valeur estimée (D) ainsi calculées dans une première expression d'opération prédéterminée, pour calculer le facteur de glissement (Rs) du pneu, dans lequel
    -   les moyens (U2) pour estimer si le véhicule prend ou pas un virage, procèdent à cette estimation sur la base de l'accélération latérale calculée (LA) du véhicule.

8.  Dispositif selon l'une quelconque des revendications 5 à 7,
    comprenant de plus :

    -   des moyens (U3) pour estimer si le facteur de glissement (Rs) prend ou pas une valeur située à l'intérieur d'une plage prédéterminée, et

- des moyens (U3) pour empêcher le calcul du facteur initial de correction ($K_3$) si on estime que le facteur de glissement (Rs) prend une valeur située à l'intérieur de la plage prédéterminée.

9. Dispositif selon l'une quelconque des revendications 5 à 8, dans lequel

- les moyens (T15) pour calculer le facteur initial de correction (Kx) comprennent des moyens pour soumettre une pluralité de données à une opération de moyennage,
- les moyens (U7) pour calculer le facteur initial de correction (Ky) comprennent des moyens pour soumettre une pluralité de données à une opération de moyennage, et
- les moyens (T16, U8) pour estimer lequel des facteurs initiaux de correction (Kx et Ky) présente la précision la plus élevée, comprennent des moyens pour estimer la précision sur la base des nombres de données qui ont été soumises aux opérations de moyennage respectives.

# FIG. 1

TRAVELING DIRECTION

4     5     6

W₁

| INITIALIZING SWITCH | STEERING SENSOR | FOOT BRAKE SENSOR |

W₂

1

1

CONTROL UNIT

2

DISPLAY

3

W₃

W₄

# F I G. 2

# F I G. 3

START

S 1 | CALCULATE ROTATIONAL ANGULAR VELOCITY $F_i$

S 2 | CALCULATE VEHICLE SPEED V

S 3 | CALCULATE FRONT/REAR ACCELERATION $FRA_i$ OF EACH TIRE $W_i$ AND FRONT/REAR ACCELERATION FRA OF VEHICLE

S 4 | ACCEPT OUTPUT SS OF FOOT BRAKE SENSOR

S 5 | REJECTED WITH REFERENCE TO V, $FRA_i$ SS ?

YES → (B)

NO

S 6 | FIRST INITIALIZATION PROCESSING

S 7 | · SUBJECT $V_i$ TO INTIAL CORRECTION PROCESSING, TO CALCULATE $V1_i$ · CALCULATE V1 USING $V1_i$

S 8 | CALCULATE TURNING RADIUS OF VEHICLE USING V1

S 9 | SUBJECT $V1_i$ TO CORRECTION FOR ELIMINATING VARIATION CAUSED BY INNER AND OUTER WHEEL DIFFERENCE OF TIRE $W_i$, TO CALCULATE $V2_i$

(A)

# F I G. 4

END

# F I G. 5

```
┌─────────────────────────────────────┐
│    FIRST INITIALIZATION PROCESSING    │
└─────────────────────────────────────┘
```

T 1 — LINEARLY TRAVELING ? — NO

YES

NO — C 1 < M A X 1 ? — T 2

YES

T 3 | $C1 \leftarrow C1 + 1$

T 4 | CALCULATE $K_1$, $K_2$

T 5 — C 1 ≧ M I N 1 ? — NO

YES

T 6 — C 2 < M A X 2 ? — NO

YES

T 7 | ACQUIRE MAXIMUM VALUE G1 FOR JUDGING COASTING

T 8 — G 1 ≧ G b 1 ? — NO

YES

T 9 | $G1 \leftarrow Gb1$

(D)

(C)

# F I G. 6

T 10 — ACQUIRE MINIMUM VALUE G2 FOR JUDGING COASTING

T 11 — $G2 \geqq Gb2$ ? — NO

YES

T 12 — $G2 \leftarrow Gb2$

T 13 — $G2 \leqq FRA \leqq G1$ ? — NO

YES

T 14 — $C2 \leftarrow C2 + 1$

T 15 — CALCULATE FACTOR $K_x$

D

T 16 — $C3 \geqq MIN3$ OR $C3 \geqq C2$ — NO

YES

T 17 — $K_3 \leftarrow Ky$ 　　　　　 $K_3 \leftarrow Kx$ — T 18

T 19 — $KB_3 \leftarrow K_3$

RETURN

# F I G. 7

FRONT/REAR
ACCELERATION
FRA

$G1 = \alpha1 \times V^2 + \alpha2 + \beta$

Gb1

Gb2

$G2 = \alpha1 \times V^2 + \alpha2 - \beta$

$FRA = \alpha1 \times V^2 + \alpha2$

VEHICLE SPEED V $\longrightarrow$

EP 0 855 597 B1

# F I G. 8

SECOND INITIALIZATION PROCESSING

U1 — $C3 < MAX3$ ? — NO

YES

U2 — $C1 \geqq MIN1'$ AND $LA1 < |LA| < LA2$ ? — NO

YES

U3 — $Rs1 < Rs < Rs2$ ? — NO

YES

U4 — $C3 \leftarrow C3 + 1$

U5 — CALCULATE JUDGED VALUE D

U6 — CALCULATE SLIP FACTOR $Rs$

U7 — CALCULATE FACTOR $Ky$

U8 — $C3 \geqq MIN3$ OR $C3 \geqq C2$ ? — NO

YES

U9 — $K_3 \leftarrow Ky$

U10 — $K_3 \leftarrow Kx$

RETURN